# EUROPÄISCHE PATENTANMELDUNG

(11) **EP 4 335 583 A1**
(43) Veröffentlichungstag der Anmeldung: **13.03.2024**
(21) Anmeldenummer: 23196124.4
(22) Anmeldetag: 08.09.2023
(51) Int. Cl.: B23Q 3/155, B23Q 3/157

(54) **WERKZEUGWECHSELVORRICHTUNG FÜR EINE WERKZEUGMASCHINE UND FERTIGUNGSSYSTEM**

(30) Priorität: 12.09.2022 DE 102022123229
(71) Anmelder: CHIRON Group SE, 78532 Tuttlingen (DE)
(72) Erfinder: Kohler, Markus, 78194 Immendingen (DE); Maret, Dylan, 1920 Martigny (CH)
(74) Vertreter: Witte, Weller & Partner Patentanwälte mbB

(57) **Zusammenfassung**

Eine Werkzeugwechselvorrichtung (100) für eine Werkzeugmaschine (10) weist eine Handhabungseinheit (108) mit einem Handhabungsroboter (110), der einen Werkzeuggreifer (112) trägt, und einen Bereitstellungsplatz (102) für ein wechselbares Werkzeugmagazin (104) auf, das als aufrecht stehendes Scheibenmagazin mit vertikaler Drehachse (152) gestaltet ist. Das Werkzeugmagazin (104) ist am Bereitstellungsplatz (102) lösbar auf einen Drehtisch (202) aufgesetzt, der eine gewünschte Drehlage des Werkzeugmagazins (104) für einen Werkzeugwechsel herbeiführt, in der ein gewählter Werkzeugplatz (164) im Werkzeugmagazin (104) für den Werkzeuggreifer (112) der Handhabungseinheit (108) erreichbar ist. Die Handhabungseinheit (108) ist dazu ausgebildet, Werkzeuge (224) zwischen dem Werkzeugmagazin (104) und einem Werkzeughalter (34) in einem Arbeitsraum (24) der Werkzeugmaschine (10) zu wechseln. Die Handhabungseinheit (108) und das Werkzeugmagazin (104) sind in einer Rüstzelle (74) der Werkzeugwechselvorrichtung (100) angeordnet, die über eine verschließbare Rüstschnittstelle (92) mit dem Arbeitsraum (24) der Werkzeugmaschine (10) verbindbar ist. Der Handhabungsroboter (110) ist dazu ausgebildet, den Werkzeuggreifer (112) durch die Rüstschnittstelle (92) hindurch in den Arbeitsraum (24) zu verfahren, um dort Werkzeuge (224) auszutauschen. Ein Fertigungssystem (60) weist eine Werkzeugmaschine (10) und eine Werkzeugwechselvorrichtung (100) auf.

## Beschreibung

Die vorliegende Offenbarung bezieht sich auf eine Werkzeugwechselvorrichtung für eine Werkzeugmaschine sowie auf ein Fertigungssystem mit einer Werkzeugmaschine und einer Werkzeugwechselvorrichtung. Gemäß verschiedenen Aspekten bezieht sich die vorliegende Offenbarung auf kompakt gestaltete Werkzeugmaschinen sowie deren Integration in Fertigungssysteme und Anlagen zur spanenden Fertigung. Kompakt gestaltete Werkzeugmaschinen sind beispielsweise solche mit einem Arbeitsraum, der kleiner als 250 mm x 250 mm x 250 mm ist.

In beispielhaften Ausgestaltungen ist der Arbeitsraum der Werkzeugmaschine kleiner als 200 mm x 200 mm x 200 mm. In beispielhaften Ausgestaltungen ist der Arbeitsraum der Werkzeugmaschine kleiner als 150 mm x 150 mm x 150 mm. In beispielhaften Ausgestaltungen ist der Arbeitsraum der Werkzeugmaschine kleiner als 100 mm x 100 mm x 100 mm. In beispielhaften Ausgestaltungen ist der Arbeitsraum der Werkzeugmaschine kleiner als 75mm x 75 mm x 75 mm. Diese Angaben betreffen insbesondere die möglichen Vorschübe (Verfahrwege) entlang der X, Y sowie der Z-Achse. Der Arbeitsraum kann würfelförmig gestaltet sein. Es sind jedoch auch quaderförmige Bauräume denkbar, deren Verfahrwege in X, Y sowie Z nicht einheitlich sind. Beispielhaft eignen sich derartig gestaltete Werkzeugmaschinen für die feinmechanische Bearbeitung, beispielsweise im Rahmen der Herstellung von Uhren, Schmuck und ähnlichem. Es versteht sich, dass auch andere Anwendungen denkbar sind, etwa im Bereich der Medizintechnik, Präzisionstechnik und dgl.

Werkzeugmaschinen und Anlagen zur spanenden Fertigung sind bekannt. Aus der US 2019/0084102 A1 ist eine Fertigungsanlage bekannt, die eine Mehrzahl übereinander und nebeneinander angeordneter kompakt gestalteter Werkzeugmaschinen aufweist, die in einer gemeinsamen Einhausung angeordnet sind, wobei zusätzlich ein Roboter für den Werkzeugwechsel und/oder Werkstückwechsel vorgesehen ist, der horizontal verfahrbar auf einem vertikal verfahrbaren Balken angeordnet ist. Die Anlage umfasst einen integrierten Speicher für Werkzeuge, die mit dem Roboter verfahrbar sind.

Aus der EP 1 985 411 A1 ist eine Werkzeugmaschine mit einer Werkzeugspindel und einer Werkstückaufnahme sowie mit einem Handhabungsroboter bekannt, der dazu ausgebildet ist, Werkstücke oder Werkzeuge zu wechseln. Der Handhabungsroboter ist nicht dazu ausgebildet, Werkzeuge direkt mit der Werkzeugspindel auszutauschen. Stattdessen ist ein horizontal verfahrbar Transferschlitten vorgesehen, der Werkzeuge zwischen dem Handhabungsroboter und der Werkzeugspindel transferiert.

Aus der DE 298 21 047 U1 ist eine Werkzeugmaschine mit Werkzeugwechselvorrichtung bekannt, wobei die Werkzeugwechselvorrichtung einen Mehrachsroboter aufweist, der mehrere Knickachsen aufweist sowie entlang einer horizontalen Linearachse zwischen zumindest einem Werkzeugmagazin und einem Spindelkopf der Werkzeugmaschine verfahrbar ist, um Werkzeuge zu wechseln. Das zumindest eine Werkzeugmagazin ist ortsfest angeordnet und während des Werkzeugwechsels unbeweglich.

Es hat sich gezeigt, dass beispielhaft mit einer kompakt gestalteten Werkzeugmaschine auch bei relativ geringen Außenabmessungen der Werkzeugmaschine die gewünschten Bauteile mit hoher Präzision und Effizienz gefertigt werden können.

Es hat sich jedoch auch gezeigt, dass unter Automatisierungsaspekten bei kompakt gestalteten Werkzeugmaschinen besondere Randbedingungen zu berücksichtigen sind. Zum einen können Transfersysteme, Handhabungseinheiten und Ähnliches nicht beliebig kompakt gestaltet werden. Selbst wenn dies technologisch möglich wäre, so gibt es in der Praxis häufig bestimmte Mindestabmessungen für Transfersysteme, Handhabungseinheit, Roboter, Greifer und ähnliches.

Dies führt unter Umständen dazu, dass die eigentliche Werkzeugmaschine (bzw. deren Arbeitsraum) klein in Relation zur Automatisierungstechnik (Handhabungstechnik, Transfersysteme und Ähnliches) ist. Ferner muss die Automatisierungstechnik (beispielsweise Roboter mit Greifer und Ähnliches) mit der Werkzeugmaschine im Bauraum (gegebenenfalls Arbeitsraum) der Werkzeugmaschine interagieren, um eine Übergabe von Werkstücken und gegebenenfalls Werkzeugen zu ermöglichen.

Ferner hat sich gezeigt, dass auch bei kompakt gestalteten Werkzeugmaschinen häufig der Wunsch nach einer Möglichkeit zur direkten visuellen Überwachung durch den Bediener besteht. Ähnlich wie bei Werkzeugmaschinen größerer Bauart werden regelmäßig Zugangsöffnungen (Türen) mit Scheiben gefordert. Dies führt in einer automatisierten Anlage dazu, dass dieser Bereich ("Vorderseite" der Werkzeugmaschine) gerade nicht für die Automatisierungstechnik zur Verfügung steht.

Ferner hat sich gezeigt, dass kompakt gestaltete Werkzeugmaschinen häufig klein im Verhältnis zu marktüblicher Automatisierungstechnik gestaltet sind. Dies resultiert in spezifischen Anforderungen für die Automatisierung kompakt gestalteter Werkzeugmaschinen. Ferner ergeben sich neue Möglichkeiten für die Automatisierung und Verkettung, die gegebenenfalls mit konventionellen Werkzeugmaschinen nicht umsetzbar waren.

Der vorliegenden Offenbarung liegt die Aufgabe zugrunde, eine Werkzeugwechselvorrichtung für eine Werkzeugmaschine anzugeben, wobei die Werkzeugwechselvorrichtung insbesondere für kompakte Werkzeugmaschinen geeignet ist. Die Werkzeugwechselvorrichtung soll möglichst besondere Rahmenbedingungen bei kompakt gestalteten Werkzeugmaschinen berücksichtigen. Mithilfe der Werkzeugwechselvorrichtung sollen sich Fertigungssysteme realisieren lassen, die auch bei nur kleinem Bauraum eine teilautomatisierte oder gar hochautomatisierte Fertigung ermöglichen. Dies bezieht sich beispielhaft auf den Werkzeugwechsel. Die Werkzeugwechselvorrichtung soll möglichst auch Speicherkapazität bereitstellen, so dass ein zumindest zeitweise autarker oder autonomer Betrieb der Werkzeugmaschine ermöglicht ist.

Schließlich soll im Rahmen der vorliegenden Offenbarung ein Fertigungssystem angegeben werden, das eine Werkzeugmaschine und eine Werkzeugwechselvorrichtung aufweist, die einen automatisierten Werkzeugwechsel und gegebenenfalls einen automatisierten Werkstückvorrichtungswechsel ermöglicht. Die Werkzeugwechselvorrichtung soll möglichst eine Mehrzahl von Speicherplätzen für Werkzeuge umfassen. Das Fertigungssystem soll insgesamt kompakt und bedienerfreundlich gestaltet sein.

Gemäß einem ersten Aspekt bezieht sich die vorliegende Offenbarung auf eine Werkzeugwechselvorrichtung für eine insbesondere kompakt gestaltete Werkzeugmaschine, die Folgendes aufweist:
- eine Handhabungseinheit mit einem Handhabungsroboter, der einen Werkzeuggreifer trägt, und
- einen Bereitstellungsplatz für ein wechselbares Werkzeugmagazin, das als aufrecht stehendes Scheibenmagazin mit vertikaler Drehachse gestaltet ist,

wobei das Werkzeugmagazin am Bereitstellungsplatz lösbar auf einen Drehtisch aufgesetzt ist, der eine gewünschte Drehlage des Werkzeugmagazins für einen Werkzeugwechsel herbeiführt, in der ein gewählter Werkzeugplatz im Werkzeugmagazin für den Werkzeuggreifer der Handhabungseinheit erreichbar ist,
wobei die Handhabungseinheit dazu ausgebildet ist, Werkzeuge zwischen dem Werkzeugmagazin und einem Werkzeughalter in einem Arbeitsraum der Werkzeugmaschine zu wechseln,
wobei die Handhabungseinheit und das Werkzeugmagazin in einer Rüstzelle der Werkzeugwechselvorrichtung angeordnet sind, die über eine verschließbare Rüstschnittstelle mit dem Arbeitsraum der Werkzeugmaschine verbindbar ist, und
wobei der Handhabungsroboter dazu ausgebildet ist, den Werkzeuggreifer durch die Rüstschnittstelle hindurch in den Arbeitsraum zu verfahren, um dort Werkzeuge auszutauschen.

Auf diese Weise kann eine Werkzeugmaschine für einen automatisierten Werkzeugwechsel ertüchtigt werden. Die Handhabungszelle eignet sich zumindest in beispielhaften Ausgestaltungen für kompakt gestaltete Werkzeugmaschinen.

Beispielsweise kann die Bearbeitung von Werkstücken mit nur kleinen Abmessungen mit Werkzeugmaschinen mit entsprechend kleinem Arbeitsraum erfolgen. Dies wirkt sich insgesamt positiv auf den Bauraumbedarf (Grundfläche) aus. Wenn jedoch Werkzeugmaschinen mit nur kleinen Abmessungen und insbesondere kleinen Bauräumen genutzt werden, kann es von Vorteil sein, wenn die Handhabungseinheit mit dem Handhabungsroboter so wenig wie möglich mit dem Arbeitsraum interagiert.

Dies kann sich auf Ausgestaltungen beziehen, bei denen der Handhabungsroboter nur zu Zwecken des Werkzeugwechsels in den Arbeitsraum der Werkzeugmaschine einfährt. Wenn gerade kein Werkzeugwechsel durchgeführt wird, ist gemäß diesen Ausgestaltungen der Handhabungsroboter vollständig aus dem Arbeitsraum herausgefahren.

In einer beispielhaften Ausgestaltung ist die erste Beladeschnittstelle durch eine Tür verschließbar, so dass der Arbeitsraum hinreichend von der Werkzeugwechselvorrichtung separiert ist, wenn kein Werkzeugwechsel erfolgt.

Gemäß einer beispielhaften Ausgestaltung ist der Handhabungsroboter dazu ausgebildet, zumindest mit dem Werkzeuggreifer durch die Rüstschnittstelle hindurch in den Arbeitsraum der Werkzeugmaschine einzufahren, um dort ein Werkzeug direkt an einen Werkzeughalter zu übergeben oder von diesem zu übernehmen.

Der Handhabungsroboter kann mit dem Werkzeuggreifer weit genug in den Arbeitsraum einfahren, um dort Werkzeuge auszuwechseln. Dies umfasst beispielhaft eine Übergabe angeforderter Werkzeuge an einen Werkzeughalter sowie eine Übernahme nicht mehr benötigter Werkzeuge vom Werkzeughalter. Da der Handhabungsroboter nicht im Arbeitsraum installiert ist, wird der Arbeitsraum nicht vom Handhabungsroboter in Anspruch genommen, wenn kein Werkzeugwechsel erfolgt und der Handhabungsroboter mit dem Werkzeuggreifer aus dem Arbeitsraum herausgefahren ist.

In einer beispielhaften Ausgestaltung ist der Handhabungsroboter in einer Zelle angeordnet, die auch als Rüstzelle bezeichnet werden kann. Die Rüstzelle ist kompakt gestaltet und dem Arbeitsraum der Werkzeugmaschine benachbart. Die Rüstschnittstelle verbindet bedarfsweise den Arbeitsraum mit der Rüstzelle.

Gemäß einer beispielhaften Ausgestaltung weist das Werkzeugmagazin zumindest zwei übereinander stehende Ebenen auf, die jeweils eine Mehrzahl von Werkzeugplätzen aufweisen. Auf diese Weise lässt sich die Kapazität des Werkzeugmagazins zur Aufnahme von Werkzeugen erhöhen. Beispielhaft wird jede Ebene durch eine Magazinscheibe gebildet. Die Gestaltung als Scheibenmagazin vereinfacht die Positionierung von Werkzeugen oder Werkzeugplätzen für die Übergabe zwischen dem Werkzeugmagazin und der Handhabungseinheit. Durch eine indexierte Rotationsbewegung um die vertikale Längsachse des Werkzeugmagazins können gewählte Werkzeugplätze positioniert werden. Beispielhaft weist jede Ebene zumindest zehn kreisförmig verteilte Werkzeugplätze auf. In einer beispielhaften Ausgestaltung sind mehr als 15 kreisförmig verteilte Werkzeugplätze auf jeder Ebene angeordnet. In einer beispielhaften Ausgestaltung sind 20 kreisförmig verteilte Werkzeugplätze auf jeder Ebene angeordnet.

Gemäß einer weiteren beispielhaften Ausgestaltung weist das Werkzeugmagazin zumindest drei übereinander stehende Ebenen auf, die jeweils eine Mehrzahl von Werkzeugplätzen aufweisen, die insbesondere entlang eines gleichen Durchmessers um die Drehachse verteilt sind. Die Ebenen sind jeweils horizontal orientiert und vertikal voneinander versetzt, zumindest in beispielhaften Ausgestaltungen.

Dies erlaubt eine weitere Erhöhung der Kapazität des Werkzeugmagazins. In einer beispielhaften Ausgestaltung wird jede der zumindest drei übereinander stehende Ebenen durch eine Magazinscheibe gebildet. In einer beispielhaften Ausgestaltung weisen die Magazinscheiben jeweils den gleichen Durchmesser auf. Das Magazin ist gemäß dieser Ausgestaltung gerade nicht terrassenförmig gestaltet.

Gemäß einer weiteren beispielhaften Ausgestaltung ist das Werkzeugmagazin in sich starr gestaltet, wobei die übereinander stehenden Ebenen drehfest über ein gemeinsames Zentrum miteinander verbunden sind. Beispielhaft wird das Zentrum durch ein Zentralprofil (etwa ein Zentralrohr) mit axialer Erstreckung entlang der Längsachse des Werkzeugmagazins gebildet. Die zwei oder mehr übereinander angeordneten Ebenen sind axial entlang der Längsachse zueinander versetzt angeordnet und beispielsweise über das Zentralprofil miteinander verbunden. Die Ebenen sind radial zugänglich für die Handhabungseinheit. Das Zentralprofil erlaubt gleichwohl eine hohe Steifigkeit, die Ebenen können sich jeweils ringartig wie ein abstehender Kragen darum erstrecken.

Gemäß einer weiteren beispielhaften Ausgestaltung weist das Werkzeugmagazin eine Auflagefläche auf, mit der das Werkzeugmagazin auf dem Drehtisch ruht, wobei die Auflagefläche entlang einer Längserstreckung des Werkzeugmagazins zumindest 30% der Längserstreckung von einem unteren Ende des Werkzeugmagazins beabstandet ist.

Auf diese Weise ruht das Werkzeugmagazin nicht mit seinem unteren Ende auf dem Drehtisch. Das untere Ende ist das dem Boden zugewandte Ende bei aufrecht stehender Orientierung des am Bereitstellungsplatz angeordneten Werkzeugmagazins. Der Drehtisch greift zumindest abschnittsweise axial in das Werkzeugmagazin ein. Das Werkzeugmagazin wird mittig abgestützt. Auf diese Weise kann eine etwaige Kippneigung minimiert werden.

Gemäß einer weiteren beispielhaften Ausgestaltung ist die Auflagefläche innerhalb eines Zentralprofils des Werkzeugmagazins angeordnet, wobei Werkzeugplätze im Werkzeugmagazin um das Zentralprofil verteilt angeordnet sind. Auf diese Weise kann das Werkzeugmagazin mit dem Zentralprofil dem Drehtisch übergestülpt werden. Auf diese Weise ergibt sich eine Kippsicherung und bedarfsweise auch eine Zentrierung, wenn eine Auflagefläche und die zugehörige Stützfläche am Drehtisch an einen Innenraum des Zentralprofils angepasst sind.

Gemäß einer weiteren beispielhaften Ausgestaltung weist das Werkzeugmagazin eine Handhabe für die manuelle Handhabung auf, insbesondere für einen manuellen Wechsel des Werkzeugmagazins. Die Handhabe ist beispielhaft als Griff beim oberen Ende des Werkzeugmagazins ausgebildet.

Insbesondere bei kompakt gestalteten Werkzeugmaschinen können Werkzeuge mit kleinen Abmessungen verwendet werden. Beispielhaft gibt es HSK-Werkzeughalter (HSK: Hohlschaftkegel] mit einem Außendurchmesser des Hohlschaftes von 40 mm, 32 mm, 25 mm oder gar 15 mm. Für besonders kompakt gestaltete Werkzeugmaschinen gibt es auch kleinere Werkzeughalter mit Hohlschaftkegel, beispielsweise mit einem Nenndurchmesser von 15 mm. Ein (Arbeits-)Durchmesser eines in einem solchen Werkzeughalter aufgenommenen Werkzeugs kann beispielsweise 4-12 mm betragen, aber auch deutlich kleiner sein. Derart miniaturisierte Werkzeuge weisen ein geringes Gewicht auf. Daher kann das Werkzeugmagazin auch bei mehreren Ebenen mit einer Mehrzahl von Werkzeugplätzen händisch bewegt werden.

Da das Werkzeugmagazin je nach Ausgestaltung eine beträchtliche Werkzeugkapazität bereitstellen kann, ist ein Wechsel oder Austausch des Werkzeugmagazins nur relativ selten erforderlich. Dies kann dann händisch unter Nutzung der Handhabe bewerkstelligt werden.

Gemäß einer weiteren beispielhaften Ausgestaltung ist am Bereitstellungsplatz zumindest ein Sensor zur Erfassung der Anwesenheit des Werkzeugmagazins und/oder zu Erfassung der Anwesenheit von Werkzeugen in Werkzeugplätzen im Werkzeugmagazin vorgesehen. Dies kann sich zum einen auf die bloße Anwesenheit beziehen (Werkzeugplatz belegt oder nicht). Es versteht sich, dass gegebenenfalls auch weitere Informationen erfasst werden können.

Gemäß einer weiteren beispielhaften Ausgestaltung ist das Werkzeugmagazin dazu ausgestaltet, Werkzeuge hängend aufzunehmen, wobei die Werkzeuge insbesondere im Werkzeugmagazin oberseitig abgedeckt sind. Dies hat den Vorteil, dass Werkzeuge im Werkzeugmagazin vor Verschmutzung von oben geschützt sind. Dies kann sich auf Späne, sonstigen Abrieb, Reste von Kühlschmiermittel und Ähnliches beziehen. Die Ebenen des als Scheibenmagazin gestalteten Werkzeugmagazins decken jeweils darunter hängend angeordnete Werkzeuge ab.

Bei der hängenden Aufnahme der Werkzeuge ist deren Schaft mit Schneide vertikal oder Wesentlichen vertikal nach unten orientiert. Mit anderen Worten entspricht bei der hängenden Aufnahme die Orientierung der Werkzeuge im Werkzeugmagazin in etwa der Orientierung eines Werkzeugs in der Werkzeugspindel der Werkzeugmaschine, jedenfalls bei einer Vertikalmaschine.

In einer beispielhaften Ausgestaltung sind die Werkzeuge über diejenige Kontur am Werkzeugplatz aufgenommen, die auch zur Aufnahme am Werkzeughalter (Werkzeugspindel) dient. Dies hat den Vorteil, dass der Transfer der Werkzeuge mit der Handhabungseinheit über andere Konturen erfolgt, die weder bei der Aufnahme am Werkzeugmagazin noch bei der Aufnahme am Werkzeughalter der Werkzeugmaschine stören. Die Aufnahme am Werkzeugplatz kann beispielhaft über den konischen Hohlschaft eines Hohlschaftkegels erfolgen. Auf diese Weise ist eine gute Zentrierung und bedarfsweise eine Verrastung zur Lagesicherung ermöglicht.

Gemäß einer weiteren beispielhaften Ausgestaltung weist das Werkzeugmagazin vertikal nach unten orientierte Werkzeugplätze auf, in die ein Werkzeugschaft eines Werkzeugs durch eine axiale Einführbewegung einführbar ist.

Die Werkzeugplätze sind beispielsweise köcherartig oder tassenartig gestaltet und unterhalb einer jeweiligen Scheibe des Scheibenmagazins angeordnet. Die Werkzeugplätze weisen gemäß dieser Ausgestaltung eine nach unten geöffnete Ausnehmung auf, in die das Werkzeug eingeführt werden kann. Das Werkzeug wird vertikal durch eine Hubbewegung in die Ausnehmung eingeführt und aus der Ausnehmung herausgeführt. In der Ausnehmung kann das Werkzeug in seinem Sitz kraftschlüssig und/oder formschlüssig gesichert werden. Der Werkzeuggreifer der Handhabungseinheit kann eine äußere Handhabungskontur des Werkzeugs nutzen, etwa eine äußere Greifernut des Hohlschaftkegels.

Gemäß einer weiteren beispielhaften Ausgestaltung weist der Handhabungsroboter eine translatorische Hubachse mit vertikaler Orientierung und zumindest eine Schwenkachse mit vertikaler Orientierung auf. In einer beispielhaften Ausgestaltung weist der Handhabungsroboter genau eine Schwenkachse mit vertikaler Orientierung und genau eine zusätzliche vertikal orientierte Drehachse für den Werkzeuggreifer auf. Das Werkzeugmagazin sitzt auf einen Drehtisch und kann daher einen gewählten Werkzeugplatz in eine definierte Übergabeposition verfahren, die für den Handhabungsroboter auch bei nur wenig Freiheitsgraden erreichbar ist.

Ein Handhabungsroboter mit mehreren Schwenkachsen, deren Schwenkachsen zueinander parallel sind, wird üblicherweise als SCARA-Roboter bezeichnet. Bei vertikaler Orientierung der Schwenkachsen erlaubt dies eine Bewegung in einer Horizontalebene. Die zusätzliche Hubachse ermöglicht Hubbewegungen senkrecht zur Horizontalebene.

Auf diese Weise können die erforderlichen Bewegungsfreiheitsgrade für einen Werkzeugwechsel zwischen dem Werkzeugmagazin und dem Werkzeughalter bereitgestellt werden. Der Handhabungsroboter ragt zumindest mit dem Werkzeuggreifer durch eine Rüstschnittstelle (Rüstöffnung) in den Arbeitsraum der Werkzeugmaschine hinein, wenn dort ein Werkzeug gewechselt wird. Der Handhabungsroboter kann sich vollständig aus dem Arbeitsraum der Werkzeugmaschine zurückziehen. Die Rüstöffnung kann über eine Tür geschlossen werden, insbesondere hermetisch geschlossen werden.

Gemäß einer weiteren beispielhaften Ausgestaltung ist der Werkzeuggreifer als Mehrfachgreifer ausgebildet, beispielsweise als Dreifachgreifer oder Vierfachgreifer. Es versteht sich, dass auch mehr als drei oder vier Greifersitze für Werkzeuge möglich sind. Der Werkzeuggreifer weist demgemäß eine Mehrzahl von Sitzen für Werkzeuge auf, wobei die Sitze etwa als Greifergabeln gestaltet sind, die zwischen zwei Armen Werkzeuge aufnehmen können.

Der Werkzeuggreifer kann seitlich an ein im Werkzeugmagazin sitzendes Werkzeug heranfahren und dieses an seiner Greifernut greifen. Sodann kann der Handhabungsroboter das Werkzeug gezielt vertikal verfahren (etwa absenken), um es von seinem Werkzeugplatz zu lösen. Danach kann das Werkzeug durch den Handhabungsroboter horizontal und vertikal bewegt werden. Das Einsetzen eines Werkzeugs in einen freien Werkzeugplatz des Werkzeugmagazins erfolgt umgekehrt.

Gemäß einer weiteren beispielhaften Ausgestaltung dient der Werkzeuggreifer als Vordergrundmagazin zur werkzeugspindelnahen Bereitstellung von zwei oder mehr verschiedenen Werkzeugen. Der Werkzeuggreifer selbst kann als Magazin mit zumindest geringer Kapazität dienen. Bei einer Gestaltung als Zweifachgreifer kann der Werkzeuggreifer ein Werkzeug vom Werkzeughalter der Werkzeugmaschine übernehmen und ein neues Werkzeug einwechseln. Bei der Gestaltung als Dreifachgreifer können neben dem freien Greifer zumindest zwei Werkzeuge bereitgestellt werden. Die Anzahl der bereitgestellten Werkzeuge kann sich entsprechend mit der Erhöhung der Anzahl der Greifer des Mehrfachgreifers erhöhen.

Insgesamt kann damit der Werkzeugwechsel weiter beschleunigt werden. In einer beispielhaften Ausgestaltung ist auch der als Vordergrundmagazin dienende Mehrfachgreifer während der Bearbeitung des Werkstücks außerhalb des Arbeitsraums positioniert. Der Mehrfachgreifer kann jedoch schnell in den Arbeitsraum hereingefahren werden, um dort ein Werkzeug zu wechseln.

Gemäß einer weiteren beispielhaften Ausgestaltung ist ein hauptzeitparalleler Wechsel des Werkzeugmagazins ermöglicht, wobei während des Wechsels des Werkzeugmagazins zumindest ein weiteres Werkzeug durch den Werkzeuggreifer einwechselbar und/oder auswechselbar ist. Mit anderen Worten kann das Werkzeugmagazin ausgetauscht werden, während die Bearbeitung des Werkstücks läuft. Sofern ein Mehrfachgreifer bei der Handhabungseinheit verwendet wird, kann bei abwesendem Werkzeugmagazin zumindest ein weiteres Werkzeug von der Handhabungseinheit selbst für einen Wechsel vorgehalten werden.

Gemäß einer weiteren beispielhaften Ausgestaltung dient das Werkzeugmagazin am Bereitstellungsplatz als Hintergrundmagazin, wobei der Werkzeuggreifer Werkzeuge mit dem Hintergrundmagazin wechselt. Auf diese Weise kann der Werkzeugwechsel weiter optimiert werden. Häufig erforderliche Werkzeuge können vom als Mehrfachgreifer gestalteten Werkzeuggreifer bereitgehalten werden, der dann als Vordergrundmagazin dient. Ein Transfer von Werkzeugen zwischen dem Werkzeugmagazin und dem Werkzeughalter erfolgt indirekt über die Handhabungseinheit.

Gemäß einer weiteren beispielhaften Ausgestaltung weist das Werkzeugmagazin im Bereich seiner Oberseite zumindest einen Aufnahmeplatz für eine Werkstückvorrichtung zur Werkstückfixierung auf einem Werkstückhalter der Werkzeugmaschine auf, wobei die zumindest eine Werkstückvorrichtung durch den Handhabungsroboter mit einem Vorrichtungsgreifer zwischen der Rüstzelle und dem Arbeitsraum transferierbar ist.

Auf diese Weise kann das Werkzeugmagazin zusätzlich zur Werkzeugkapazität zumindest einen Aufnahmeplatz für Vorrichtungen zur Fixierung von Werkstücken am Werkstückhalter bereitstellen. Ein Wechsel der Werkstückvorrichtung kann unter Nutzung der Handhabungseinheit erfolgen. Gemäß einer weiteren beispielhaften Ausgestaltung ist am Bereitstellungsplatz zumindest ein Sensor zur Erfassung der Anwesenheit von Werkstückvorrichtungen am Werkzeugmagazin vorgesehen.

Gemäß einer weiteren beispielhaften Ausgestaltung ist die zumindest eine Werkstückvorrichtung stehend auf dem Werkzeugmagazin platzierbar, wobei der Vorrichtungsgreifer an eine Greifernut der zumindest einen Werkstückvorrichtung angepasst ist.

Die zumindest eine Werkstückvorrichtung kann demgemäß auf einer Oberseite des Werkzeugmagazins platziert werden. Der Vorrichtungsgreifer ist als Endeffektor beim Handhabungsroboter verbaut und kann über diesen in den Arbeitsraum der Werkzeugmaschine eingefahren werden.

Der Vorrichtungsgreifer weist zumindest einem Greifer zur Aufnahme einer Werkstückvorrichtung auf. Die Handhabungseinheit ist beispielhaft dazu ausgestaltet, den Werkzeuggreifer innerhalb der Werkzeugwechselvorrichtung abzulegen und stattdessen den Vorrichtungsgreifer als Endeffektor zu nutzen. Sodann kann eine Werkzeugvorrichtung gewechselt werden. Es ist vorstellbar, einen kombinierten Greifer zu verwenden, der sowohl als Werkzeuggreifer als auch als Vorrichtungsgreifer dient.

Gemäß einem weiteren Aspekt bezieht sich die vorliegende Offenbarung auf eine Kombination aus einer offenbarungsgemäßen Werkzeugwechselvorrichtung und einer offenbarungsgemäßen Werkzeugmaschine. Eine Werkzeugmaschine, die aufgrund der Werkzeugwechselvorrichtung zum automatischen Werkzeugwechsel befähigt ist, kann auch als Bearbeitungszentrum bezeichnet werden.

Ferner bezieht sich die vorliegende Offenbarung auf ein Fertigungssystem für die spanende Fertigung, insbesondere zur Herstellung feinmechanischer Werkstücke, das Folgendes aufweist:
- zumindest eine insbesondere kompakt gestaltete Werkzeugmaschine, die zur Mehrachsbearbeitung ausgebildet ist, und die einen Werkzeughalter und einen Werkstückhalter aufweist, die relativ zueinander in zumindest drei Achsen verfahrbar sind,
   wobei der Werkzeughalter und der Werkstückhalter an einer Rückseite eines Arbeitsraums der Werkzeugmaschine angeordnet sind, und
- eine Werkzeugwechselvorrichtung gemäß zumindest einer der hierin beschriebenen Ausgestaltungen, die seitlich an den Arbeitsraum der Werkzeugmaschine ankoppelt.

Auf diese Weise kann die Werkzeugmaschine zumindest teilautomatisiert betrieben werden, wobei Werkzeuge teilautomatisch oder vollautomatisch gewechselt werden können.

Die Vorderseite des Arbeitsraums ist daher zumindest in beispielhaften Ausgestaltungen frei und für einen Bediener einsehbar und zugänglich. Die Vorderseite kann auch als Bedienerseite bezeichnet werden. Die Vorderseite ist der Rückseite gegenüberliegend angeordnet. Seitliche Seiten des Arbeitsraums stehen für die Handhabung (Werkstückwechsel, Werkzeugwechsel) zur Verfügung. Auf diese Weise wird der kompakten Bauart Rechnung getragen.

Die Werkzeugwechselvorrichtung ist dem Arbeitsraum der Werkzeugmaschine benachbart, beispielsweise mit einem geringen Abstand seitlich hierzu angeordnet. Die Handhabungseinheit ist der Werkzeugwechselvorrichtung und nicht der Werkzeugmaschine zugeordnet. Dies heißt, dass bei der Werkzeugmaschine, die nur einen verhältnismäßig kleinen Arbeitsraum aufweist, keine aufwändigen Eingriffe und Anpassungen erforderlich sind.

Die Handhabungseinheit kann den Werkzeughalter anfahren, um einen Werkzeugwechsel vorzunehmen. Sofern die Handhabungseinheit auch zum Wechseln von Werkstückvorrichtungen dient, kann die Handhabungseinheit den Werkstückhalter anfahren, um dort eine Vorrichtung zur Fixierung von Werkstücken zu platzieren.

Beispielhaft umfasst das Fertigungssystem eine Mehrzahl von Werkzeugmagazinen, von denen eines am Bereitstellungsplatz der Werkzeugwechselvorrichtung bereitsteht. Übrige Werkzeugmagazine können außerhalb der Werkzeugwechselvorrichtung bestückt werden. Auf diese Weise kann durch einen Wechsel des Werkzeugmagazins mit nur einem Schritt eine hohe Anzahl von Werkzeugen gewechselt werden (Blockrüsten).

In einer beispielhaften Ausgestaltung umfasst das Fertigungssystem ein gemeinsames Gehäuse und gegebenenfalls sogar ein gemeinsames Gestell für die Werkzeugmaschine und die Werkzeugwechselvorrichtung. Gleichwohl ist eine Schnittstelle zwischen dem Arbeitsraum der Werkzeugmaschine und einer Rüstzelle der Werkzeugwechselvorrichtung vorgesehen, die bei Bedarf geschlossen werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Offenbarung zu verlassen.

Weitere Merkmale und Vorteile der Offenbarung ergeben sich aus der nachfolgenden Beschreibung und Erläuterung mehrerer beispielhafter Ausführungsformen unter Bezugnahme auf die Zeichnungen. Es zeigen:
- Fig. 1:: eine perspektivische Ansicht einer Werkzeugmaschine;
- Fig. 2:: eine perspektivische Ansicht eines Fertigungssystems mit einer Werkzeugmaschine und einer mit dieser gekoppelten Werkzeugwechselvorrichtung, die gemeinsam in einer Einhausung angeordnet sind;
- Fig. 3:: eine auf Fig. 2 beruhende perspektivische Teilansicht des Fertigungssystems mit aus einer Bedienersicht geöffneten Türen einer Rüstzelle der Werkzeugwechselvorrichtung sowie eines Arbeitsraums der Werkzeugmaschine;
- Fig. 4:: eine perspektivische Ansicht von Komponenten der Werkzeugwechselvorrichtung gemäß Fig. 3;
- Fig. 5:: eine perspektivische Ansicht eines Bereitstellungsplatzes für ein Werkzeugmagazin;
- Fig. 6:: eine perspektivische Teilansicht eines Werkzeugmagazins;
- Fig. 7:: eine teilweise geschnittene Ansicht eines Werkzeugs, eines Werkzeuggreifers sowie eines Werkzeugplatzes im Werkzeugmagazin zur Veranschaulichung der Positionierung des Werkzeugs im Werkzeugmagazin; und
- Fig. 8:: eine perspektivische Teilansicht einer Werkstückvorrichtung mit zugehörigem Vorrichtungsgreifer.

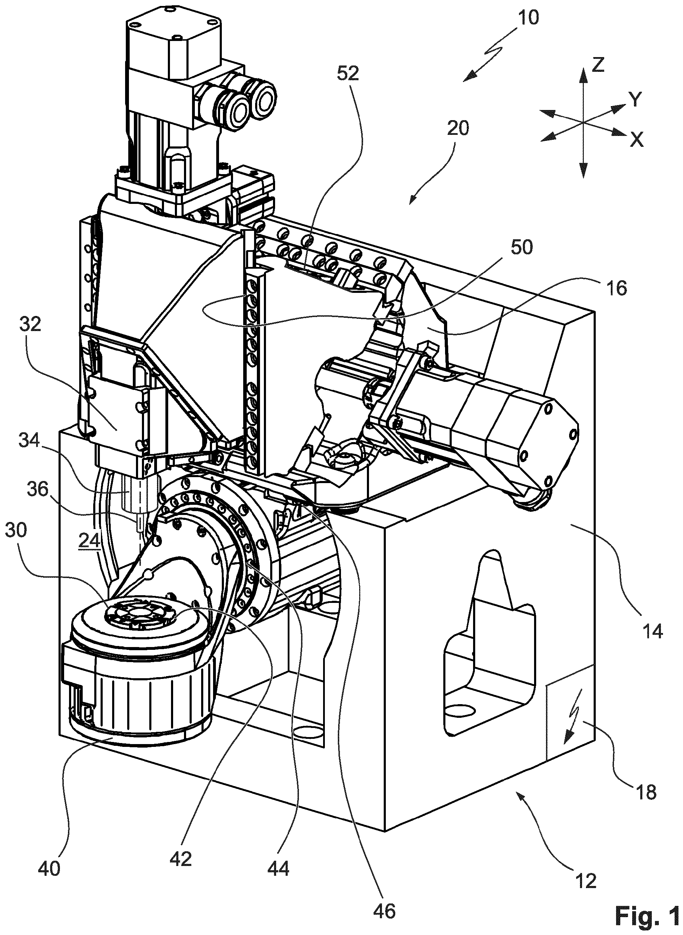

Fig. 1 veranschaulicht anhand einer perspektivischen Darstellung eine beispielhafte Ausgestaltung einer kompakt gestalteten Werkzeugmaschine 10, die sich zur Herstellung feinmechanischer Bauteile eignet. Die Werkzeugmaschine 10 umfasst ein Gestell 12, das im Ausführungsbeispiel ein Untergestell 14 umfasst, auf dem ein Gestellblock 16 gelagert ist. Wesentliche Kräfte, die bei der Bearbeitung entstehen, werden vom Gestellblock 16 aufgenommen. Das Untergestell 14 dient als Auflage für den Gestellblock 16. In Fig. 1 ist ferner mit 18 eine Steuereinrichtung der Werkzeugmaschine 10 angedeutet. Die Steuereinrichtung 18 steuert Komponenten und Funktionen der Werkzeugmaschine 10, um Werkstücke in der gewünschten Weise zu bearbeiten. Auch eine Steuerung über externe Einrichtungen ist vorstellbar.

Die Werkzeugmaschine 10 umfasst ferner eine Kinematik 20, die als Mehrachs-Kinematik gestaltet ist. In Fig. 1 ist aus Veranschaulichungsgründen ein kartesisches Koordinatensystem X-Y-Z gezeigt. Das Koordinatensystem X-Y-Z umfasst eine X-Achse (Seitenrichtung), eine Y-Achse (Tiefenrichtung), und eine Z-Richtung (Höhenrichtung). Die X-Achse und die Y-Achse sind im Ausführungsbeispiel horizontale Achsen. Die Z-Achse ist im Ausführungsbeispiel eine vertikale Achse. Die Achsen X-Y-Z stehen orthogonal aufeinander. Das Koordinatensystem X-Y-Z dient in erster Linie zur Veranschaulichung und Beschreibung von Komponenten und Funktionen der Werkzeugmaschine 10. Es versteht sich, dass zu diesen Zwecken auch andere Koordinatensysteme verwendbar sind. Das Koordinatensystem X-Y-Z ist daher nicht einschränkend zu verstehen. Der Fachmann kann die erforderlichen gedanklichen Schritte zur Überführung in andere Koordinatensysteme ohne weiteres durchführen.

Die Kinematik 20 umfasst im Ausführungsbeispiel verschiedene Bauteile, die mittelbar oder unmittelbar am Gestellblock 16 gelagert sind. Dies sorgt für kurze Kraftwege und eine hohe Steifigkeit. In Fig. 1 ist ferner mit 24 ein Arbeitsraum angedeutet, in dem die Bearbeitung mit der Werkzeugmaschine 10 stattfindet.

Die Werkzeugmaschine 10 umfasst ferner einen Werkstückhalter (auch: Werkstückaufnahme) 30 zur Aufnahme zumindest eines zu bearbeitenden Werkstücks. Ferner ist eine Werkzeugspindel 32 vorgesehen. Die Werkzeugspindel 32 umfasst einen Werkzeughalter 34, der zur Aufnahme eines Werkzeugs 36 ausgebildet ist. Das Werkzeug 36 ist rotatorisch antreibbar, um ein vom Werkstückhalter 30 gehaltenes Werkstück zu bearbeiten.

Der Werkstückhalter 30 sitzt im Ausführungsbeispiel auf einem einseitig geführten Ausleger 40, der einen Schwenkantrieb oder Drehantrieb 42 für den Werkstückhalter 30 beherbergt. Die auf diese Weise bereitgestellte rotatorische Achse kann auch als C-Achse bezeichnet werden. Der Ausleger 40 ist über einen weiteren Schwenkantrieb 44 mit einem Linearantrieb 46 gekoppelt, der wiederum am Gestellblock 16 gelagert ist. Der Schwenkantrieb 44 stellt eine rotatorische Achse bereit, die als B-Achse bezeichnet werden kann. Der Linearantrieb 46 stellt eine translatorische Achse bereit, die als Y-Achse bezeichnet werden kann.

Die Werkzeugspindel 32 ist über einen Linearantrieb 50 und einen Linearantrieb 52 mit dem Gestellblock 16 gekoppelt. Der Linearantrieb 50 stellt eine translatorische Achse bereit, die auch als Z-Achse bezeichnet werden kann. Der Linearantrieb 52 stellt eine translatorische Achse bereit, die auch als X-Achse bezeichnet werden kann. Die beiden Linearantriebe 50, 52 bilden einen Kreuzschlittenantrieb. Im Ausführungsbeispiel sind zwei translatorische Achsen (X, Z) der Werkzeugspindel 32 bzw. dem Werkzeug zugeordnet. Eine translatorische Achse (Y) ist dem Werkstückhalter30 bzw. dem Werkstück zugeordnet. Ferner sind im Ausführungsbeispiel zwei rotatorische Achsen/Schwenkachsen (B, C) dem Werkstückhalter30 bzw. dem Werkstück zugeordnet. Andere Arten der Zuordnung sind denkbar und vom Konzept der Maschinenkinematik abhängig.

Insgesamt stellt die Werkzeugmaschine 10 einen kompakten Arbeitsraum 24 bereit. Dies führt wiederum zu einer geringen Baugröße der Werkzeugmaschine 10, verbunden mit geringem Gewicht und geringem Energiebedarf. Gleichwohl kann aufgrund der konstruktiv vorgegebenen Steifigkeit eine hohe Präzision und eine hohe Abtragsleistung gewährleistet werden. Der Arbeitsraum 24 ist gut zugänglich, da der Werkstückhalter 30 und der Werkzeughalter 34 jeweils an eine Rückseite des Arbeitsraums 24 mittelbar oder unmittelbar am Gestellblock 16 sowie am Untergestell 14 des Gestells 12 angeordnet und gelagert sind. Damit stehen grundsätzlich drei Seiten (Vorderseite sowie zwei seitliche Seiten) für einen horizontalen Zugang zum Arbeitsraum 24 zur Verfügung.

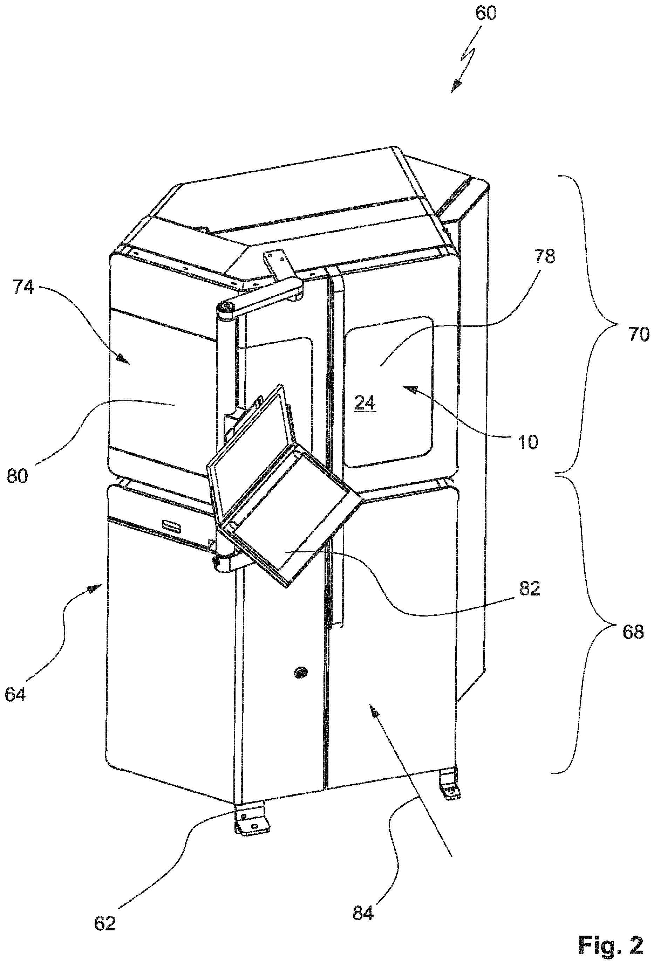

Fig. 2 veranschaulicht anhand einer perspektivischen Darstellung eine Ausgestaltung eines Fertigungssystems 60, das eine Werkzeugmaschine 10 beherbergt, die etwa gemäß der in Fig. 1 veranschaulichten Ausführungsform gestaltet ist. Das Fertigungssystem 60 ruht auf einem Gestell 62. Das Fertigungssystem 60 umfasst eine im Ausführungsbeispiel schrankartig gestaltete Einhausung 64, die die Werkzeugmaschine 10 umschließt.

Das Fertigungssystem 60 umfasst im Ausführungsbeispiel gemäß Fig. 2 ein Unterteil 68 und ein auf dem Unterteil 68 ruhendes Oberteil 70. Das Oberteil 70 beherbergt die Werkzeugmaschine 10. Benachbart zur Werkzeugmaschine 10 ist eine Rüstzelle 74 angeordnet, die Komponenten beherbergt, die zum Werkzeugwechsel und/oder zum Wechsel von Werkstückvorrichtungen dienen. In Fig. 1 ist eine Tür 78 vorgesehen, die einen Bedienerzugang zur Werkzeugmaschine 10, insbesondere zu deren Arbeitsraum 24, bereitstellt. Ferner ist eine Tür 80 vorgesehen, die einen Bedienerzugang zur Rüstzelle 74 bereitstellt. Die Türen 78, 80 sind beim Oberteil 70 der schrankartig gestalteten Einhausung 64 vorgesehen. Die Türen 78, 80 umfassen üblicherweise Sichtfenster, die die Bedienung und Überwachung des Fertigungssystems 60 vereinfachen.

Zur Bedienung des Fertigungssystems 60 ist eine Bedienkonsole 82 vorgesehen, die in Nachbarschaft zur Tür 78 bzw. zur Tür 80 angeordnet ist. Bei der in Fig. 2 gezeigten Gestaltung kann ein Bediener das Fertigungssystem 60 gut über eine Vorderseite 84 (auch: Bedienerseite) einsehen und bedienen. Dies bezieht sich auf die Werkzeugmaschine 10 und deren Arbeitsraum 24. Dies bezieht sich ferner jedoch auch auf die Rüstzelle 74 und die Bedienkonsole 82. Die Bedienkonsole 82 ist üblicherweise verschwenkbar und/oder anderweitig verstellbar, so dass eine günstige Ergonomie gegeben ist. Bei Betrachtung der Werkzeugmaschine 10 über die Vorderseite 84 ist die Rüstzelle 74 dem Arbeitsraum 24 der Werkzeugmaschine 10 seitlich benachbart und seitlich an diesen angekoppelt. Auf diese Weise ist weiterhin eine gute Sicht über die Vorderseite 84 gewährleistet.

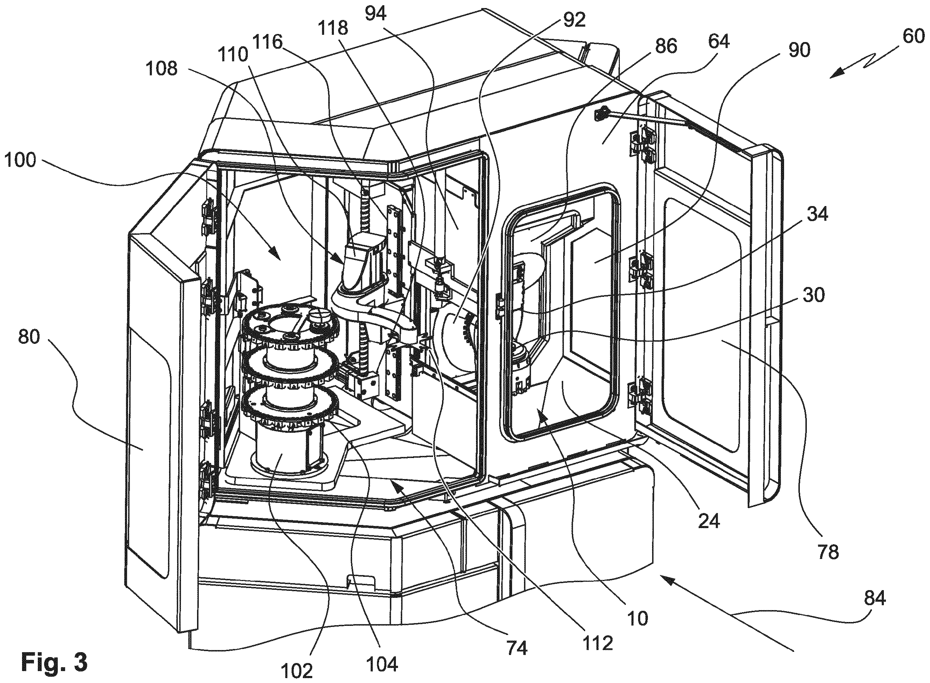

Fig. 3 veranschaulicht anhand einer vergrößerten Ansicht Komponenten der Rüstzelle 74. In Fig. 3 sind die Türen 78 der Werkzeugmaschine 10 und 80 der Rüstzelle 74 aus Veranschaulichungsgründen geöffnet dargestellt. Ein jeweiliger Innenraum ist sichtbar.

Die Werkzeugmaschine 10 ist bei geöffneter Tür 78 über die Vorderseite 84 zugänglich. Eine der Vorderseite 78 gegenüberliegende Rückseite ist mit 86 bezeichnet. Der Werkstückhalter 30 und der Werkzeughalter 34 sind im Ausführungsbeispiel an der Rückseite 86 gelagert. Dies gewährleistet eine gute Zugänglichkeit. Die Werkzeugmaschine 10 ist mit ihrem Arbeitsraum 24 innerhalb der Einhausung 64 angeordnet. Der Arbeitsraum 24 weist seitlich eine Beladeschnittstelle 90 und an einer gegenüberliegenden Seite eine Rüstschnittstelle 92 auf. Die Beladeschnittstelle 90 ist beispielhaft für einen automatisierten Werkstückwechsel nutzbar. Die Rüstschnittstelle 92 dient beispielsweise dem Werkzeugwechsel. Die Rüstschnittstelle 92 wird in beispielhaften Ausgestaltungen auch für einen Wechsel von Werkzeugvorrichtungen zur Fixierung von Werkstücken genutzt.

Auf diese Weise wird einerseits auf den kompakten Bauraum der Werkzeugmaschine 10 und den begrenzten Arbeitsraum 24 Rücksicht genommen. Ferner stehen definierte Öffnungen bereit, über die der Arbeitsraum 24 zu Zwecken des automatisierten Werkstückwechsels (Beladeschnittstelle 90) und des automatisierten Werkzeugwechsels (Rüstschnittstelle 92) zugänglich ist. Die Vorderseite 84 wird hierfür nicht oder nur wenig in Anspruch genommen. Die Vorderseite 84 ist weiter für einen Bediener gut zugänglich.

Im Ausführungsbeispiel gemäß Fig. 3 weist die Rüstschnittstelle 92 eine durch eine Tür 94 verschließbare Öffnung auf. Die Tür 94 kann bedarfsweise geöffnet werden, um die Öffnung der Rüstschnittstelle 92 freizugeben. Die Tür 94 ist im Ausführungsbeispiel als vertikal verfahrbare Hubtür (Guillotine) gestaltet.

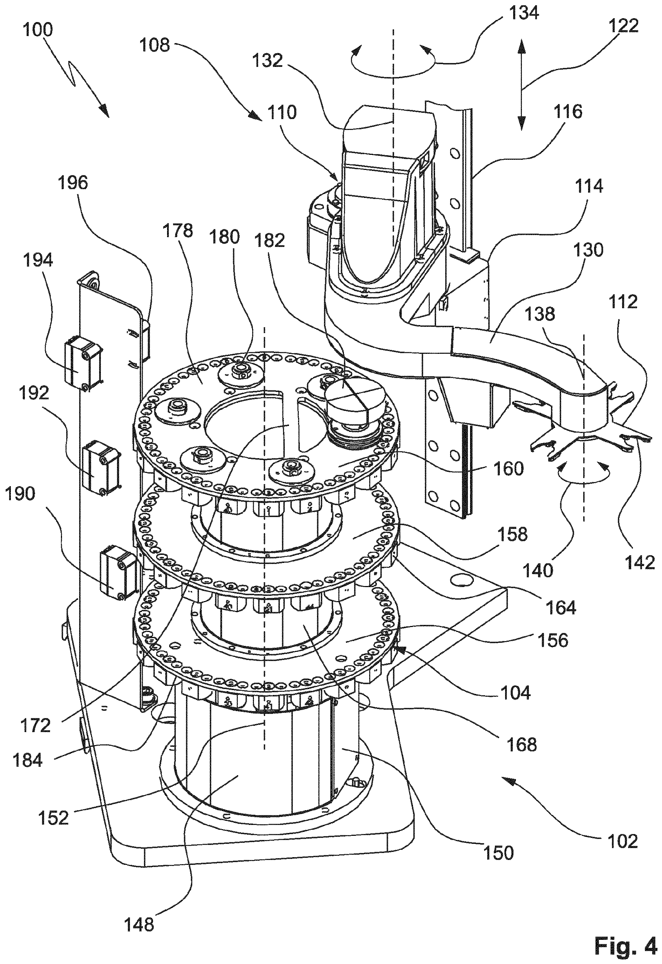

Die Rüstzelle 74 ist Bestandteil einer Werkzeugwechselvorrichtung 100. Die Werkzeugwechselvorrichtung 100 wird anhand der Figuren 3 und 4 veranschaulicht. Die Werkzeugwechselvorrichtung 100 umfasst einen Bereitstellungsplatz 102 für ein Werkzeugmagazin 104. Im Ausführungsbeispiel ist das Werkzeugmagazin 104 ein vertikal orientiertes Scheibenmagazin. Der Bereitstellungsplatz 102 dient zur Aufnahme sowie zur Rotation des Werkzeugmagazins 104 innerhalb der Rüstzelle 74. Das Werkzeugmagazin 104 stellt eine Mehrzahl oder Vielzahl von Werkzeugen in der Rüstzelle 74 bereit, die in den Arbeitsraum 24 eingewechselt werden können, um den Werkzeughalter 34 der Werkzeugmaschine 10 zu bestücken.

Die Werkzeugwechselvorrichtung 100 umfasst ferner eine Handhabungseinheit 108 mit einem Handhabungsroboter 110. Aufgabe der Handhabungseinheit 108 ist ein Transfer von Werkzeugen zwischen dem Werkzeugmagazin 104 und dem Werkzeughalter 34. In beispielhaften Ausgestaltungen dient die Handhabungseinheit 108 auch dazu, Werkstückvorrichtungen zwischen der Rüstzelle 74 und dem Arbeitsraum 24 zu transferieren.

Der Handhabungsroboter 110 weist in Fig. 3 einen Endeffektor in Form eines Werkzeuggreifers 112 auf. Der Handhabungsroboter 110 umfasst eine Basis 114 (vergleiche Fig. 4), die entlang einer Hubachse 116 vertikal verfahrbar ist. Vergleiche hierzu einen in Fig. 3 mit 118 bezeichneten Hubantrieb. Die sich ergebende Hubbewegung wird in Fig. 4 durch einen mit 122 bezeichneten Doppelpfeil veranschaulicht. Der Handhabungsroboter 110 weist ferner einen Schwenkarm 130 auf, der um eine Schwenkachse 132 verschwenkbar ist, vergleiche einen gekrümmten Doppelpfeil 134 in Fig. 4 zur Veranschaulichung der Schwenkbewegung. Der Schwenkarm 130 ist an der Basis 114 gelagert und über diese entlang der Hubachse 116 verfahrbar. In einer beispielhaften Ausgestaltung ist der Handhabungsroboter 110 als vertikal verfahrbarer horizontaler Gelenkarmroboter gestaltet. Die Schwenkachse 132 ist vertikal orientiert. Demgemäß bewegt sich der Schwenkarm 130 bei der Schwenkbewegung entlang einer horizontalen Bahn. Beispielhaft ist der Handhabungsroboter 110 als SCARA-Roboter gestaltet.

Bei der in den Figuren 3 und 4 gezeigten Ausführungsform ist der Schwenkarm 130 in sich steif und über lediglich eine einzige Schwenkachse 132 an der Basis 114 schwenkbar gelagert. Auf diese Weise kann die Anzahl der erforderlichen Freiheitsgrade und die Anzahl der erforderlichen Antriebe reduziert werden. Der Schwenkarm 130 ist (in Draufsicht) etwa S-förmig gekrümmt. Auf diese Weise kann der Schwenkarm 130 mit dem daran aufgenommenen Werkzeuggreifer 112 durch die (geöffnete) Rüstschnittstelle 92 bewegt werden, um Werkzeuge mit dem Werkzeughalter 34 der Werkzeugmaschine 10 auszutauschen. Es versteht sich, dass auch Gestaltungen mit zusätzlichen (insbesondere vertikal orientierten) Schwenkachsen vorstellbar sind.

Der Werkzeuggreifer 112 sitzt an einem von der Basis 114 abgewandten Ende des Schwenkarms 130. Der Werkzeuggreifer 112 ist über eine Drehachse 138 rotierbar, vergleiche einen gekrümmten Doppelpfeil 140 in Fig. 4. Der Werkzeuggreifer 112 umfasst einen oder mehrere Greifersitze 142 zur Aufnahme von Werkzeugen. Die Greifersitze 142 sind etwa gabelförmig gestaltet, um zwischen zwei Armen/Zinken ein Werkzeug aufzunehmen. Der Werkzeuggreifer 112 ist insbesondere als Mehrfachgreifer mit zumindest zwei Greifersitzen 142 zur Aufnahme von Werkzeugen gestaltet. Im Ausführungsbeispiel weist der Werkzeughalter 112 insgesamt vier Greifersitze 142 auf, die jeweils um 90° versetzt um die Drehachse 138 angeordnet sind. Die Gestaltung des Werkzeuggreifers 112 als Mehrfachgreifer reduziert die Werkzeugwechselzeiten, weil der Werkzeuggreifer 112 nicht mehrmals zwischen dem Werkzeugmagazin 104 und dem Werkzeughalter 34 durch die Rüstschnittstelle 92 hindurch bewegt werden muss, um ein Werkzeug am Werkzeughalter durch ein anderes zu ersetzen.

Der Bereitstellungsplatz 102 trägt das Werkzeugmagazin 104. Das Werkzeugmagazin 104 sitzt auf einem Podest 148 am Bereitstellungsplatz 102. Beim Bereitstellungsplatz 102 ist ein Drehantrieb 150 für das Werkzeugmagazin 104 vorgesehen. Auf diese Weise kann das Werkzeugmagazin 104 um eine Drehachse 152 rotiert werden. Dies erlaubt eine gezielte Bereitstellung von Werkzeugen und berücksichtigt die denkbare vereinfachte Gestaltung des Handhabungsroboters 110 mit nur einer Schwenkachse 132.

Das Werkzeugmagazin 104 weist im Ausführungsbeispiel drei übereinander angeordnete Ebenen 156, 158, 160 auf. Jede der Ebenen 156, 158, 160 ist etwa scheibenförmig oder ringscheibenförmig gestaltet. Im Ausführungsbeispiel gemäß Fig. 4 ist der Scheibendurchmesser der Ebenen 156, 158, 160 identisch. Die Ebenen 156, 158, 160 tragen jeweils eine Mehrzahl oder Vielzahl von Werkzeugplätzen 164. Im Ausführungsbeispiel gemäß Fig. 4 sind drei übereinander angeordnete Ebenen 156, 158, 160 mit jeweils 20 Werkzeugplätzen 164 vorgesehen. Dies ist nicht einschränkend zu verstehen. Die Werkzeugplätze 164 sind kreisförmig um die Drehachse 152 bzw. um ein Zentrum 168 des Werkzeugmagazins 104 verteilt.

Das Werkzeugmagazin 104 kann gezielt rotiert (indexiert) werden, um einen gewählten Werkzeugplatz 164 bei einer Übergabeposition zum Austausch von Werkzeugen mit dem Werkzeuggreifer 112 des Handhabungsroboters 110 bereitzustellen. Der Handhabungsroboter 110 kann über die Hubachse 116 vertikal verfahren werden, um eine der Ebenen 156, 158, 160 anzufahren.

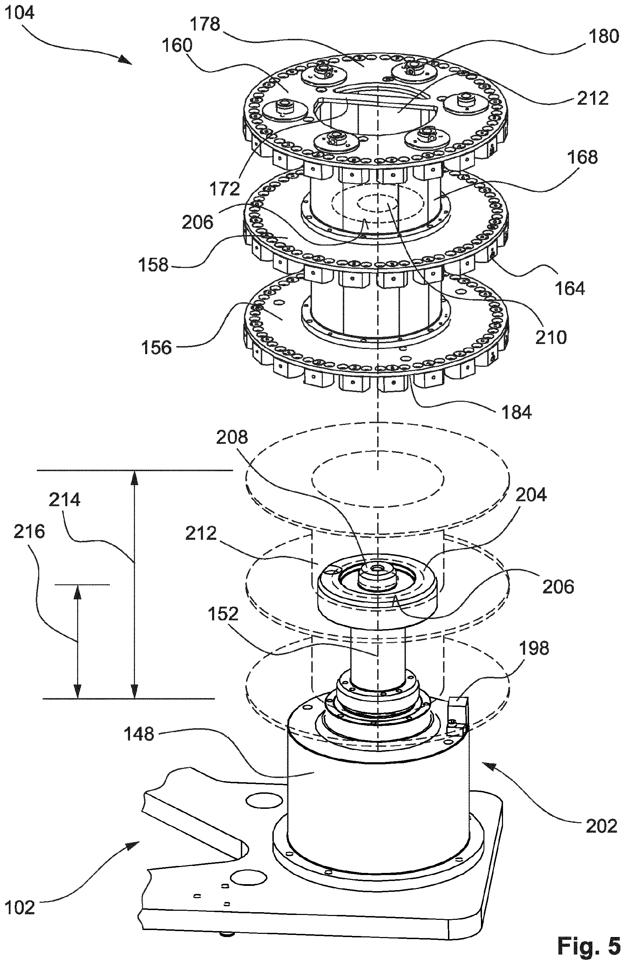

Das Werkzeugmagazin 104 ist in sich steif gestaltet. Mit anderen Worten sind die Ebenen 156, 158, 160 starr zueinander und nicht relativ zueinander verdrehbar oder anderweitig verfahrbar. Die Ebenen 156, 158, 160 sind fest miteinander über das Zentrum 168 verbunden. Das Werkzeugmagazin 104 ähnelt optisch einer Etagere mit durchmessergleichen Ablagen. Insbesondere bei der Nutzung für kompakt gestaltete Werkzeugmaschinen 10 ist das Werkzeugmagazin 104 trotz beträchtlicher Kapazität hinreichend kompakt und leichtgewichtig gestaltet. Dies erlaubt einen händischen Wechsel des Werkzeugmagazins 104. Ein Wechsel des Werkzeugmagazins 104 wird durch eine Handhabe 172 bei der Oberseite 178 des Werkzeugmagazins 104 vereinfacht. Über die Handhabe 172 kann ein Bediener das Werkzeugmagazin 104 anheben und aus der Rüstzelle 74 (vergleiche Fig. 3 und Fig. 5) herausheben. Auf diese Weise ist ein Blockrüsten möglich, wobei durch nur einen Rüstvorgang eine Vielzahl von Werkzeugen bereitgestellt wird.

In beispielhaften Ausgestaltungen ist ein Wechsel des Werkzeugmagazins 104 hauptzeitparallel möglich. In diesem Zusammenhang ist es von Vorteil, dass die Rüstschnittstelle 92 durch die Tür 94 hermetisch verschließbar ist. Wenn der Werkzeuggreifer 112 als Mehrfachgreifer gestaltet ist, kann bei Bedarf selbst während der Abwesenheit des Werkzeugmagazins 104 noch ein Werkzeugwechsel erfolgen, weil der Werkzeuggreifer 112 zumindest ein Werkzeug bevorraten kann.

In beispielhaften Ausgestaltungen dient das Werkzeugmagazin 104 als Hintergrundmagazin, wobei der Werkzeuggreifer 112 als Mehrfachgreifer gestaltet ist und als Vordergrundmagazin dient. Dies kann den Werkzeugwechsel weiter beschleunigen und insgesamt die Bearbeitungszeit reduzieren.

In beispielhaften Ausgestaltungen dient das Werkzeugmagazin 104 auch zur Aufnahme und Bereitstellung zumindest einer Werkstückvorrichtung 182. Zu diesem Zweck sind im Ausführungsbeispiel an der Oberseite 178 des Werkzeugmagazins 104 Aufnahmeplätze 180 angeordnet, die zur Aufnahme von Werkstückvorrichtungen 182 ausgebildet sind. Die Werkstückvorrichtungen 182 erleichtern die Aufnahme und Fixierung von Werkstücken auf dem Werkstückhalter 30 der Werkzeugmaschine 10. Im Ausführungsbeispiel gemäß Fig. 4 sind insgesamt sechs Aufnahmeplätze 180 an der Oberseite 178 der (oberen) Ebene 160 vorgesehen, wobei einer der Aufnahmeplätze 180 mit einer Werkstückvorrichtung 182 bestückt ist.

Im Ausführungsbeispiel gemäß Fig. 4 sind ferner Sensoren 190, 192, 194 zur Erfassung des Belegungszustands des Werkzeugmagazins 104 vorgesehen. Beispielhaft sind die Sensoren 190, 192, 194 dazu ausgebildet, die Anwesenheit eines Werkzeugs in einem der Werkzeugplätze 164 zu erfassen, wenn das Werkzeugmagazin 104 rotiert wird und der überwachte Werkzeugplatz 164 den Sensor 190, 192, 194 passiert. Der Sensor 190 dient zur Überwachung der Ebene 156. Der Sensor 192 dient zur Überwachung der Ebene 158. Der Sensor 194 dient zur Überwachung der Ebene 160. Ferner ist ein weiterer Sensor 196 vorgesehen, der zur Erfassung des Belegungszustands der Aufnahmeplätze 180 an der Oberseite 178 dient. Auf diese Weise kann die Anwesenheit von Werkstückvorrichtungen 182 im Werkzeugmagazin 104 überwacht werden. Ein von der Oberseite 178 des Werkzeugmagazins 104 abgewandtes Ende wird als unteres Ende 184 bezeichnet.

Fig. 5 zeigt das Werkzeugmagazin 104 in einem vom Bereitstellungsplatz 102 abgehobenen Zustand. Eine gestrichelte Darstellung veranschaulicht ergänzend den am Bereitstellungsplatz 102 aufgesetzten Zustand. Im Ausführungsbeispiel ist beim Bereitstellungsplatz 102 ein Sensor 198 vorgesehen, der die Anwesenheit eines Werkzeugmagazins 104 erfasst.

Der Bereitstellungsplatz 102 stellt einen Drehtisch 202 für das Werkzeugmagazin 104 bereit, so dass ein aufgesetztes Werkzeugmagazin 104 definiert um die Drehachse 152 rotierbar ist. Beim Werkzeugmagazin 104 ist eine Auflagefläche 206 (in Fig. 5 lediglich gestrichelt angedeutet) vorgesehen, mit der das Werkzeugmagazin 104 auf einer Stützfläche 204 des Drehtisches 202 absetzbar ist. Zusätzlich ist im Ausführungsbeispiel beim Drehtisch 202 ein Zapfen 208 vorgesehen, der für eine Zentrierung sorgt. Der Zapfen 208 durchragt die Stützfläche 204. Die Auflagefläche 206 ist im Ausführungsbeispiel ringförmig gestaltet und an die Stützfläche 204 angepasst. Innerhalb der Auflagefläche 206 ist eine Ausnehmung 210 vorgesehen, in die der Zapfen 208 eingreift, wenn das Werkzeugmagazin 104 auf dem Drehtisch 202 sitzt.

Das Werkzeugmagazin 104 ist über den dornartig vorstehenden Drehtisch 202 gestülpt. Der Drehtisch 202 stützt das Werkzeugmagazin 104 mit der Stützfläche 204 innerhalb eines im Zentrum 168 des Werkzeugmagazins 104 ausgebildeten Zentralprofils 212. Das Zentralprofil 212 ist etwa als Rohrprofil gestaltet. Der Drehtisch 202 ragt in das Zentralprofil 212 hinein. In Fig. 5 veranschaulicht einen Doppelpfeil 214 eine Längserstreckung des Werkzeugmagazins 104 entlang der Drehachse 152. Ein Doppelpfeil 216 beschreibt ein Einführmaß für den Drehtisch 202. Das Werkzeugmagazin 104 ist also nicht lediglich an seinem unteren Ende 184 auf den Drehtisch 202 aufgesetzt. Vielmehr ragt der Drehtisch 202 um das Einführmaß 216 in das Zentralprofil 212 hinein. Dies erhöht die Standsicherheit und Kippfestigkeit des Werkzeugmagazins 104 und insgesamt die Betriebssicherheit.

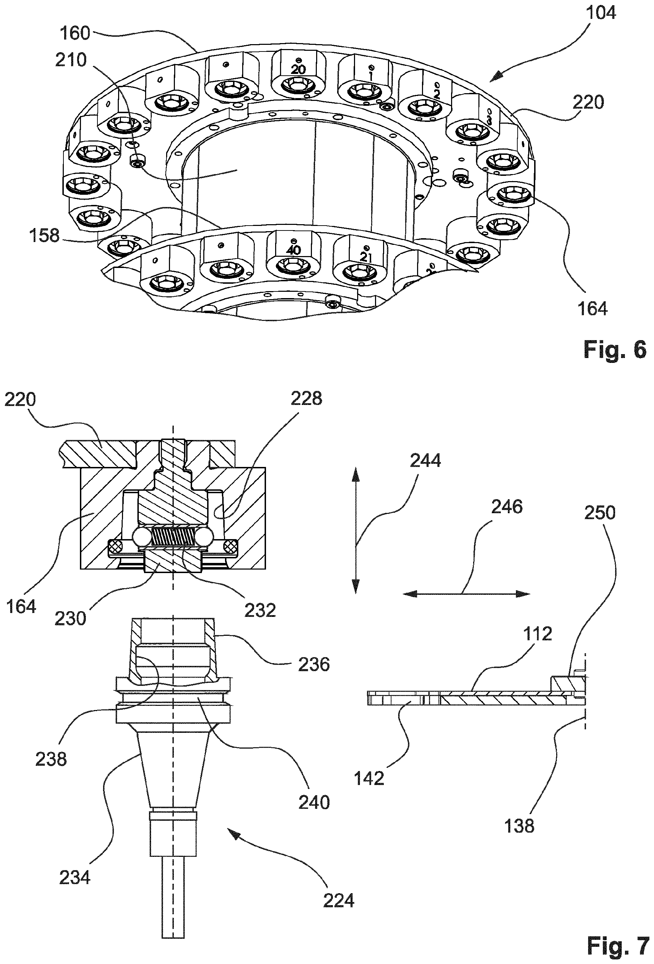

Fig. 6 zeigt eine perspektivische Teilansicht des Werkzeugmagazins 104 von unten her. Es wird ersichtlich, dass die Werkzeugplätze 164 jeweils an den Ebenen 160,158 nach unten orientiert sind. Die Werkzeugplätze 164 sind um das rohrartige Zentralprofil 210 verteilt. Die Ebenen 158,160 umfassen jeweils eine Scheibe 220, die etwa als Ringscheibe gestaltet ist. Die Scheiben 220 decken die Werkzeugplätze 164 von oben ab. An den Werkzeugplätzen 164 können Werkzeuge hängend in vertikaler Orientierung aufgenommen werden.

Fig. 7 veranschaulicht anhand teilweise geschnittener (Teil-)Darstellungen die Befestigung eines Werkzeugs 224 an einem Werkzeugplatz 164. Die Scheibe 220 einer der Ebenen 156, 158, 160 trägt den nach unten (hängend) orientierten Werkzeugplatz 164. Der Werkzeugplatz 164 umfasst einen Köcher 228 sowie innerhalb des Köchers 228 einen Zapfen 230, der ein federbelastetes Rastelement 232 beherbergt.

Das Werkzeug 224 umfasst einen Werkzeugschaft 234 mit einem Hohlschaft 236. Mit dem Hohlschaft 236 kann das Werkzeug 224 in den Köcher 228 des Werkzeugplatzes 164 eingeführt und zentriert werden. Das Rastelement 232 kann in eine Rastnut 238 einrasten, so dass das Werkzeug 224 hängend im Werkzeugplatz 164 gesichert ist. Auf diese Weise sind aufgenommene Werkzeuge 224 im Werkzeugmagazin 104 von oben durch die jeweilige Scheibe 220 und den Köcher 228 geschützt. Die Orientierung entspricht derjenigen der Werkzeug 224 im Werkzeughalter 34 der Werkzeugmaschine 10, zumindest in beispielhaften Ausgestaltungen.

Ein Einsetzen oder eine Entnahme des Werkzeugs 224 erfolgt über den Werkzeuggreifer 112 (in Fig. 7 als Halbschnitt dargestellt). Der Werkzeuggreifer 112 weist einen oder mehrere Greifersitze 142 auf. Der Greifersitz 142 kann über eine Horizontalbewegung 246 in eine Greifernut 240 am Werkzeugschaft 234 des Werkzeugs 224 einrücken. Die Horizontalbewegung 246 wird über den Handhabungsroboter 110 bereitgestellt, etwa über eine kombinierte Bewegung der Schwenkachse 132 sowie der Drehachse 138, vergleiche hierzu Fig. 4. Das Einsetzen in den Werkzeugplatz 164 oder die Entnahme aus dem Werkzeugplatz 164 erfolgt bei koaxialer Ausrichtung zwischen Werkzeug 224 und Werkzeugplatz 164 über eine Hubbewegung 244, die über die Hubachse 116 des Handhabungsroboters 110 bereitgestellt wird. Der Werkzeuggreifer 112 weist eine Schnittstelle 250 zur Aufnahme am Schwenkarm 130 des Handhabungsroboters 110 auf.

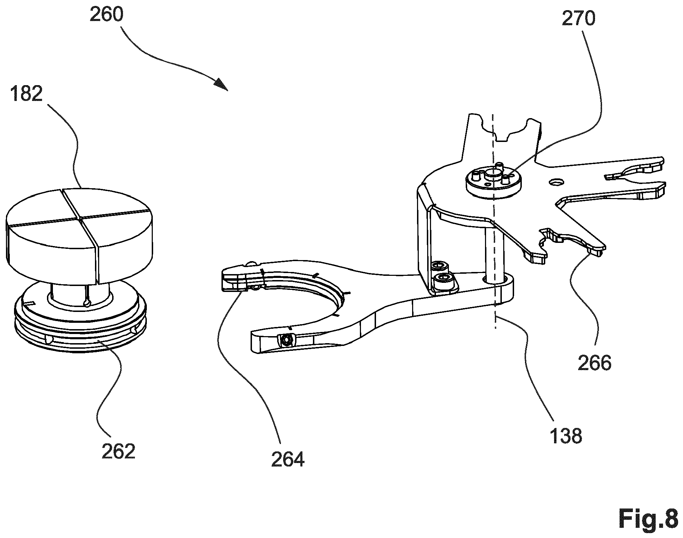

Fig. 8 veranschaulicht eine beispielhafte Ausgestaltung eines Vorrichtungsgreifers 260, der zur Handhabung von Werkstückvorrichtungen 182 ausgebildet ist, die an Aufnahmeplätzen 180 auf der Oberseite 178 des Werkzeugmagazins 104 aufnehmbar sind. Die Werkstückvorrichtung 182 weist eine Greifernut 262 auf, in die ein Greifersitz 264 des Vorrichtungsgreifers 260 einrücken kann. Sodann kann die Werkstückvorrichtung 182 von ihrem Aufnahmeplatz 180 abgehoben und in den Arbeitsraum 24 der Werkzeugmaschine eingewechselt werden, und umgekehrt, vergleiche auch Fig. 3 und Fig. 4.

In der in Fig. 8 gezeigten Ausgestaltung umfasst der Vorrichtungsgreifer 260 neben dem Greifersitz 264 für Werkstückvorrichtung 182 weitere Greifersitze 266, die zur Handhabung von Werkzeugen 224 ausgebildet sind. Im Ausführungsbeispiel ist somit der Vorrichtungsgreifer 260 als Hybrid-Greifer gestaltet und sowohl zur Handhabung von Werkstückvorrichtungen 182 als auch zur Handhabung von Werkzeugen 224 ausgebildet. Der Vorrichtungsgreifer 260 weist eine Schnittstelle 270 zur Aufnahme am Schwenkarm 130 des Handhabungsroboters 110 auf.

In einer beispielhaften Ausgestaltung sind die Schnittstellen 250, 270 des Werkzeuggreifers 112 und des Vorrichtungsgreifers 260 zur lösbaren Montage am Schwenkarm 130 des Handhabungsroboters 110 ausgebildet. Auf diese Weise kann der Handhabungsroboter 110 bedarfsweise innerhalb der Rüstzelle 74 die genutzten Greifer 112, 260 wechseln.

## Patentansprüche

1. Werkzeugwechselvorrichtung (100) für eine insbesondere kompakt gestaltete Werkzeugmaschine (10), die Folgendes aufweist:
- eine Handhabungseinheit (108) mit einem Handhabungsroboter (110), der einen Werkzeuggreifer (112) trägt, und
- einen Bereitstellungsplatz (102) für ein wechselbares Werkzeugmagazin (104), das als aufrecht stehendes Scheibenmagazin mit vertikaler Drehachse (152) gestaltet ist,
wobei das Werkzeugmagazin (104) am Bereitstellungsplatz (102) lösbar auf einen Drehtisch (202) aufgesetzt ist, der eine gewünschte Drehlage des Werkzeugmagazins (104) für einen Werkzeugwechsel herbeiführt, in der ein gewählter Werkzeugplatz (164) im Werkzeugmagazin (104) für den Werkzeuggreifer (112) der Handhabungseinheit (108) erreichbar ist,
wobei die Handhabungseinheit (108) dazu ausgebildet ist, Werkzeuge (224) zwischen dem Werkzeugmagazin (104) und einem Werkzeughalter (34) in einem Arbeitsraum (24) der Werkzeugmaschine (10) zu wechseln,
wobei die Handhabungseinheit (108) und das Werkzeugmagazin (104) in einer Rüstzelle (74) der Werkzeugwechselvorrichtung (100) angeordnet sind, die über eine verschließbare Rüstschnittstelle (92) mit dem Arbeitsraum (24) der Werkzeugmaschine (10) verbindbar ist, und
wobei der Handhabungsroboter (110) dazu ausgebildet ist, den Werkzeuggreifer (112) durch die Rüstschnittstelle (92) hindurch in den Arbeitsraum (24) zu verfahren, um dort Werkzeuge (224) auszutauschen.

2. Werkzeugwechselvorrichtung (100) nach Anspruch 1, wobei das Werkzeugmagazin (104) zumindest zwei übereinander stehende Ebenen (156, 158, 160) aufweist, die jeweils eine Mehrzahl von Werkzeugplätzen (164) aufweisen, und wobei das Werkzeugmagazin (104) insbesondere zumindest drei übereinander stehende Ebenen (156, 158, 160) aufweist, die jeweils eine Mehrzahl von Werkzeugplätzen (164) aufweisen.

3. Werkzeugwechselvorrichtung (100) nach Anspruch 2, wobei die Werkzeugplätze (164) entlang eines in den übereinander stehenden Ebenen (156, 158, 160) jeweils gleichen Durchmessers um die Drehachse (152) verteilt sind.

4. Werkzeugwechselvorrichtung (100) nach Anspruch 2 oder 3, wobei das Werkzeugmagazin (104) in sich starr gestaltet ist, und wobei die übereinander stehenden Ebenen (156, 158, 160) drehfest über ein gemeinsames Zentrum (168) miteinander verbunden sind.

5. Werkzeugwechselvorrichtung (100) nach einem der Ansprüche 1-4, wobei das Werkzeugmagazin (104) eine Auflagefläche (206) aufweist, mit der das Werkzeugmagazin (104) auf einer Stützfläche (204) auf dem Drehtisch (202) ruht, und wobei die Auflagefläche (206) entlang einer Längserstreckung (214) des Werkzeugmagazins (104) um zumindest 30% der Längserstreckung von einem unteren Ende (184) des Werkzeugmagazins (104) beabstandet ist.

6. Werkzeugwechselvorrichtung (100) nach Anspruch 5, wobei die Auflagefläche (206) innerhalb eines Zentralprofils (212) des Werkzeugmagazins (104) angeordnet ist, und wobei Werkzeugplätze (164) im Werkzeugmagazin (104) um das Zentralprofil (212) verteilt angeordnet sind.

7. Werkzeugwechselvorrichtung (100) nach einem der Anspruche 1-6, wobei das Werkzeugmagazin (104) eine Handhabe (172) für die manuelle Handhabung, insbesondere für einen manuellen Wechsel des Werkzeugmagazins (104) aufweist.

8. Werkzeugwechselvorrichtung (100) nach einem der Ansprüche 1-7, wobei das Werkzeugmagazin (104) dazu ausgestaltet ist, Werkzeuge (224) hängend aufzunehmen, und wobei die Werkzeuge (224) insbesondere im Werkzeugmagazin (104) von oben abgedeckt sind.

9. Werkzeugwechselvorrichtung (100) nach Anspruch 8, wobei das Werkzeugmagazin (104) vertikal nach unten orientierte Werkzeugplätze (164) aufweist, in die ein Werkzeugschaft (238) eines Werkzeugs (224) durch eine axiale Einführbewegung einführbar ist.

10. Werkzeugwechselvorrichtung (100) nach einem der Ansprüche 1-9, wobei der Handhabungsroboter (110) eine translatorische Hubachse (116) mit vertikaler Orientierung und zumindest eine Schwenkachse (132) mit vertikaler Orientierung aufweist.

11. Werkzeugwechselvorrichtung (100) nach einem der Ansprüche 1-10, wobei der Werkzeuggreifer (112) als Mehrfachgreifer ausgebildet ist, insbesondere als Dreifachgreifer oder Vierfachgreifer.

12. Werkzeugwechselvorrichtung (100) nach Anspruch 11, wobei der Werkzeuggreifer (112) als Vordergrundmagazin zur werkzeugspindelnahen Bereitstellung von zwei oder mehr verschiedenen Werkzeugen (224) dient, und/oder wobei ein hauptzeitparalleler Wechsel des Werkzeugmagazins (104) ermöglicht ist, wobei während des Wechsels des Werkzeugmagazins (104) zumindest ein weiteres Werkzeug (224) durch den Werkzeuggreifer (112) einwechselbar und/oder auswechselbar ist.

13. Werkzeugwechselvorrichtung (100) nach Anspruch 11 oder 12, wobei das Werkzeugmagazin (104) am Bereitstellungsplatz (102) als Hintergrundmagazin dient, und wobei der Werkzeuggreifer (112) Werkzeuge (224) mit dem Hintergrundmagazin wechselt.

14. Werkzeugwechselvorrichtung (100) nach einem der Ansprüche 1-13, wobei das Werkzeugmagazin (104) im Bereich seiner Oberseite (178) zumindest einen Aufnahmeplatz (180) für eine Werkstückvorrichtung (182) zur Werkstückfixierung auf einem Werkstückhalter (30) der Werkzeugmaschine (10) aufweist, und wobei die zumindest eine Werkstückvorrichtung (182) durch den Handhabungsroboter (110) mit einem Vorrichtungsgreifer (260) zwischen der Rüstzelle (74) und dem Arbeitsraum (24) transferierbar ist, und wobei insbesondere die zumindest eine Werkstückvorrichtung (182) stehend auf dem Werkzeugmagazin (104) platzierbar ist, wobei der Vorrichtungsgreifer (260) an eine Greifernut (262) der zumindest einen Werkstückvorrichtung (182) angepasst ist.

15. Fertigungssystem für die spanende Fertigung, insbesondere zur Herstellung feinmechanischer Werkstücke, das Folgendes aufweist:
- zumindest eine insbesondere kompakt gestaltete Werkzeugmaschine (10), die zur Mehrachsbearbeitung ausgebildet ist, und die einen Werkzeughalter (34) und einen Werkstückhalter (30) aufweist, die relativ zueinander in zumindest drei Achsen verfahrbar sind,
wobei der Werkzeughalter (34) und der Werkstückhalter (30) an einer Rückseite (86) eines Arbeitsraums (24) der Werkzeugmaschine (10) angeordnet sind, und
- eine Werkzeugwechselvorrichtung (100) nach einem der Ansprüche 1-14, die seitlich an den Arbeitsraum (24) der Werkzeugmaschine (10) ankoppelt.
